# FASCICULE DE BREVET EUROPEEN

(11) **EP 0 488 905 B1**
(45) Date de publication et mention de la délivrance du brevet: **26.01.1994**
(21) Numéro de dépôt: 91420362.5
(22) Date de dépôt: 14.10.1991
(51) Int. Cl.: A01J 25/12

(54) **Dispositif pour le moulage des fromages à pâtes pressées**
Vorrichtung zum Formen von gepresstem Käse
Device for the production of pressed cheese

(30) Priorité: 29.11.1990 FR 9015632
(43) Date de publication de la demande: 03.06.1992
(73) Titulaire: CHALON-MEGARD, 01460 La Cluse (FR)
(72) Inventeur: Megard, Pierre, F-01130 Nantua (FR)
(74) Mandataire: Bratel, Gérard

(56) Documents cités:
- EP-A- 0 174 637
- DE-C- 3 701 943
- FR-A- 2 437 777
- US-A- 3 805 689

## Description

La présente invention se rapporte à l'industrie fromagère et elle concerne, plus particulièrement, un dispositif pour le moulage des fromages à pâtes pressées.

Le moulage des fromages à pâtes pressées peut s'effectuer soit dans des bacs de drainage, soit dans des mouleuses tubulaires.

Dans les mouleuses tubulaires, le mélange caillé-sérum provenant des cuves de fabrication est transféré, par exemple au moyen d'une pompe positive à lobes, dans des colonnes tubulaires de moulage. Ces colonnes tubulaires sont réalisées généralement par des tubes verticaux en acier inoxydable, perforés pour permettre l'évacuation du sérum et la constitution simultanée d'un boudin de caillé plus ou moins égoutté. A la base de chaque colonne, on trouve dans les réalisations traditionnelles un couteau obturateur à mouvement horizontal, surmontant un conformateur cylindrique correspondant aux dimensions d'un fromage unitaire, et un obturateur à mouvement horizontal situé sous le conformateur. Ces moyens permettent de découper le boudin de caillé en "tranches" horizontales correspondant chacune à un fromage, et d'amener chaque fromage dans un moule final, qui est placé sous l'obturateur inférieur puis transféré vers une unité de pressage. Toutefois, une telle disposition présente les inconvénients suivants :
- il est impossible de régler la hauteur de coupe, celle-ci étant obligatoirement égale à la hauteur du conformateur ;
- lors de chaque opération de coupe d'une "tranche" de caillé, le boudin de caillé descend brutalement, en subissant une chute libre de hauteur égale à celle du conformateur. Cette chute présente l'inconvénient d'une rupture soudaine dans la continuité du processus et, dans le cas de fromages de grands diamètres (250 à 450 mm), elle est aussi la cause de cassures à l'intérieur du fromage en cours de fabrication et de "trous mécaniques" préjudiciables à la qualité du produit final.

Pour éviter ces inconvénients, les mouleuses tubulaires actuelles bénéficient déjà de certains perfectionnements. Ainsi, l'obturateur inférieur est remplacé par un piston mobile verticalement, qui monte jusqu'au niveau du couteau obturateur supérieur et qui accompagne ensuite, après ouverture de ce couteau obturateur, la descente du boudin de caillé jusqu'à la hauteur de fromage désirée, totalement réglable (coupe par coupe si nécessaire) dans la limite de la hauteur du conformateur. Le couteau se referme alors et le fromage, ainsi formé, est descendu jusqu'à la base du conformateur, accompagné dans sa descente par le piston mobile. Ensuite, le conformateur lui-même décrit un mouvement de translation horizontal de façon à dégager le fromage du piston et à transférer ce fromage dans le moule final, lequel est alors amené vers l'unité de pressage.

Ces dispositions, et le fonctionnement qu'elles autorisent, donnent des résultats positifs du point de vue du réglage de la hauteur de coupe et de l'empêchement de la chute libre du boudin de caillé. Cependant, elles présentent l'inconvénient majeur de donner lieu à des réalisations lourdes mécaniquement, difficiles à nettoyer et très coûteuses. Un dispositif correspondant au préambule de la revendication 1 est décrit dans le document DE-C-3701943.

Ainsi, l'invention vise à fournir une réalisation industrielle simplifiée, économique et dont les organes sont d'accès commode pour leur nettoyage.

A cet effet, l'invention a pour objet un dispositif pour le moulage des fromages à pâtes pressées correspondant à la revendication 1, avec au moins une colonne tubulaire de moulage à la base de laquelle est prévu un couteau obturateur à mouvement horizontal, surmontant un conformateur, et un obturateur inférieur à mouvement horizontal, et des moyens étant prévus pour déplacer l'obturateur inférieur non seulement en direction horizontale mais aussi en direction verticale, le dispositif étant caractérisé en ce que la paroi latérale du conformateur comporte des fentes verticales débouchantes vers le bas, et en ce que l'obturateur inférieur est percé de fentes discontinues selon une ligne fermée correspondant à la section horizontale du conformateur, les fentes de l'obturateur inférieur étant séparées les unes des autres par des parties pleines situées en correspondance avec les fentes verticales du conformateur, de façon à ce que cet obturateur inférieur puisse coulisser librement dans le conformateur, jusqu'à une position haute adjacente au couteau obturateur.

Dans le cas du moulage des fromages cylindriques, le conformateur à paroi latérale cylindrique comporte des fentes verticales s'étendant suivant des génératrices de cette paroi cylindrique, tandis que l'obturateur inférieur est percé de fentes discontinues en forme d'arcs de cercle, réparties le long d'une ligne circulaire. Dans le cas du moulage des fromages à forme carrée ou autre forme non cylindrique, le conformateur peut être constitué par des éléments de paroi, notamment de forme plane séparés les uns des autres par des fentes verticales débouchantes vers le bas ; dans ce dernier cas, les fentes discontinues du conformateur inférieur peuvent être chacune de forme rectiligne, et réparties le long d'une ligne brisée.

Dans tous les cas, l'obturateur inférieur peut"pénétrer" le conformateur grâce aux fentes complémentaires, et être amené pratiquement jusqu'au niveau du couteau obturateur pour recevoir la base du boudin de caillé, puis l'accompagner dans sa descente, au cours de laquelle la coupe de fromage est réalisée à la hauteur voulue. Dans sa position la plus basse, l'obturateur inférieur se trouve dégagé du conformateur et peut être déplacé horizontalement pour permettre la chute du fromage dans le moule final.

De préférence, l'obturateur inférieur est réalisé en deux demi-obturateurs inférieurs avec fentes, pourvus chacun de moyens de commande de déplacement horizontal prévus pour déplacer les deux demi-obturateurs simultanément et symétriquement en les écartant ou les rapprochant l'un de l'autre. Ainsi, la chute du fromage dans le moule final s'effectue sans risque de mise en travers de ce fromage, les deux demi-obturateurs inférieurs s'ouvrant en même temps.

De toute façon, l'invention sera mieux comprise à l'aide de la description qui suit, en référence au dessin schématique annexé représentant, à titre d'exemple non limitatif, une forme d'exécution de ce dispositif pour le moulage des fromages à pâtes pressées :
Figure 1 est une vue d'ensemble, en perspective, d'un dispositif conforme à la présente invention pour le moulage de fromages cylindriques ;
Figures 2 à 7 sont des schémas illustrant le fonctionnement du dispositif objet de l'invention.

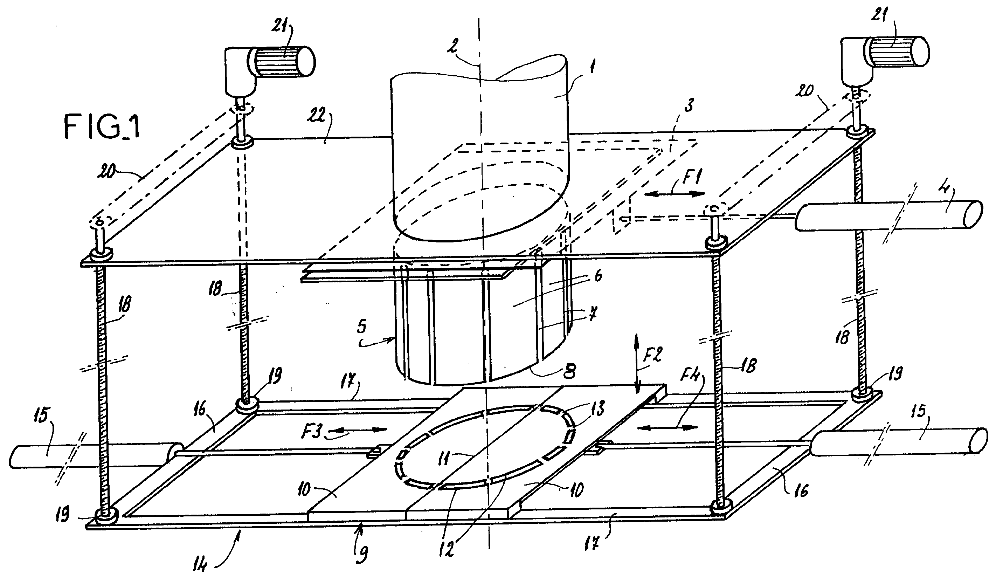

Le dispositif représenté au dessin, notamment sur la figure 1 est destiné au moulage des fromages à pâtes pressées et il comprend une colonne tubulaire de moulage 1, dont l'axe vertical est indiqué en 2. Il s'agit plus particulièrement, dans l'exemple considéré, d'une colonne 1 de section horizontale circulaire, prévue pour le moulage de fromages cylindriques, la paroi de cette colonne 1 étant perforée.

A la base de la colonne de moulage 1 est disposé un couteau obturateur 3, qui s'étend dans un plan horizontal et qui est déplaçable horizontalement dans son plan. Le déplacement horizontal du couteau obturateur 3, selon la flèche F1, est commandé par un vérin à double effet 4.

Sous la colonne de moulage 1 et le couteau obturateur 3 est disposé un conformateur fixe 5, qui possède une paroi latérale cylindrique 6 située dans le prolongement de la paroi de la colonne 1. La paroi latérale 6 du conformateur 5 comporte suivant ses génératrices une série de fentes verticales 7, régulièrement espacées et assez fines, par exemple larges de2 ou 3 mm, qui débouchent sur le bord inférieur 8 de cette paroi 6 mais n'en atteignent pas le sommet.

Le dispositif comprend encore un obturateur inférieur 9, qui s'étend dans un plan horizontal et qui est réalisé en deux demi-obturateurs inférieurs 10, jointifs en position de fermeture suivant un bord rectiligne 11 croisant l'axe vertical 2.

En considérant les deux demi-obturateurs inférieurs 10 réunis comme montré sur la figure 1, ceux-ci sont percés de fentes discontinues 12 en forme d'arcs de cercle, réparties le long d'une ligne circulaire de même diamètre que le conformateur 5, et séparées les unes des autres par des parties pleines 13. Ces parties pleines 13 sont situées en correspondance avec les fentes verticales 7 du conformateur 5, et possèdent une dimension circonférentielle très légèrement inférieure à la largeur desdites fentes verticales 7, de façon à ce que l'obturateur inférieur 9 puisse coulisser librement dans le conformateur 5 en direction verticale, jusqu'à une position haute définie par l'extrémité supérieure des fentes verticales 7.

Les deux demi-obturateurs 10 sont montés mobiles et guidés en translation sur un même cadre-support horizontal 14; sur lequel sont aussi montés des moyens de commande permettant de déplacer horizontalement ces deux demi-obturateurs 10. Dans l'exemple considéré, le déplacement horizontal de chaque demi-obturateur 10 est commandé par un vérin à double effet 15, dont le corps est fixé sur l'un des petits côtés 16 du cadre-support 14. Chaque demi-obturateur 10 est pourvu de pignons non représentés, en prise avec des crémaillères portées par les grands côtés 17 du cadre-support 14, pour éviter tout coincement de ce demi-obturateur 10 par mise en travers au cours de son déplacement horizontal commandé par le vérin 15 correspondant, un tel mécanisme étant bien connu en soi.

Tout l'ensemble constitué par le cadre-support 14, les deux demi-obturateurs inférieurs 10, leurs vérins de commande 15 et les mécanismes associés, est monté mobile verticalement, d'autres moyens de commande étant prévus pour déplacer cet ensemble verticalement. Dans l'exemple considéré, quatre mécanismes verticaux à vis 18 et écrou 19 sont prévus, respectivement, aux quatre angles du cadre-support 14. Ces mécanismes vis-écrou 18-19 sont accouplés deux par deux au moyen de chaînes sans fin 20, et chaque paire de mécanismes accouplés est entraînée à partir d'un moto-réducteur 21 disposé au-dessus d'un châssis fixe supérieur 22. Les deux moto-réducteurs 21 fonctionnent en synchronisme de manière à déplacer le cadre-support 14 en direction verticale suivant la flèche F2, en le maintenant parfaitement horizontal, avec automatisation du positionnement par des codeurs incrémentaux. Les deux vérins 15 sont aussi actionnés de façon synchronisée, pour déplacer les deux demi-obturateurs simultanément et symétriquement en les écartant ou les rapprochant l'un de J'autre selon les flèches F3 et F4.

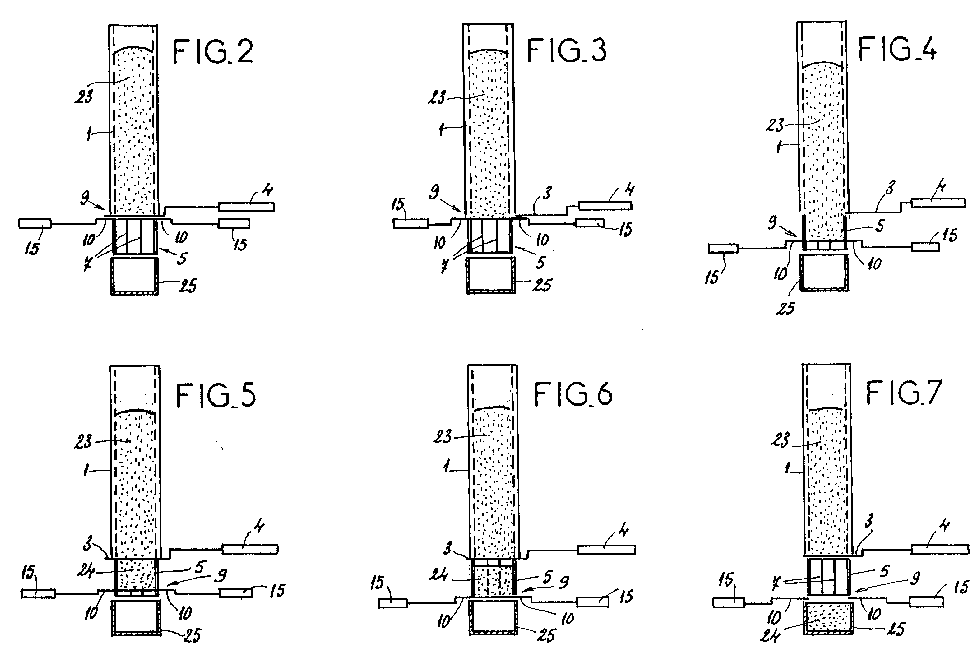

Le fonctionnement du dispositif précédemment décrit est illustré par les figures 2 à 7.

Le couteau obturateur 3 se trouvant en position de fermeture, la colonne tubulaire de moulage 1 reçoit un mélange caillé-sérum ; le sérum étant évacué par les perforations de la colonne 1, on constitue dans celle-ci un boudin de caillé égoutté 23. L'obturateur inférieur 9 est initialement mis en position de fermeture, ses deux demi-obturateurs 10 étant rapprochés l'un de l'autre, et il est positionné dans la partie supérieure du conformateur 5 ; ainsi, l'obturateur inférieur 9 occupe sa position haute, dans laquelle il vient pratiquement toucher le couteau obturateur 3 - voir figure 2.

Après ouverture du couteau obturateur 3, commandée par le vérin 4, le boudin de caillé 23 descend sous l'effet de la gravité, en étant accompagné par la descente simultanée de l'obturateur inférieur 9, commandée à partir des moto-réducteurs 21. La descente du boudin de caillé 23 s'effectue ainsi entre la position de la figure 3 et la position de la figure 4, sur une certaine course verticale qui correspond à la hauteur désirée d'un fromage.

Dans cette dernière position, la descente de l'obturateur inférieur 9 est momentanément interrompue, et le couteau obturateur 3 est refermé pour couper le boudin de caillé 23 (voir figure 5). On a ainsi séparé de ce boudin de caillé 23 une masse de caillé cylindrique 24, correspondant à un fromage.

Ensuite, la descente de l'obturateur inférieur 9 est poursuivie jusqu'à sa position la plus basse, dans laquelle cet obturateur 9 est entièrement dégagé par rapport au conformateur 5 (figure 6).

Un moule 25 correspondant au volume d'un fromage étant disposé sous le conformateur 5, l'obturateur inférieur 9 est ouvert par écartement des deux demi-obturateurs 10, déplacés simultanément et symétriquement par les vérins 15. L'ouverture inférieure du conformateur 5 est ainsi dégagée, et le fromage 24 tombe dans le moule 25 (figure7 ). Le moule 25 rempli est évacué vers une unité de pressage.

Ensuite, l'obturateur inférieur 9 est refermé et remonté jusqu'à sa position haute, tandis qu'un nouveau moule vide 25 est amené sous le conformateur 5 (figure 1 ), et le même cycle peut se répéter pour séparer du boudin de caillé 23 un nouveau fromage et l'amener dans le moule 25, et ainsi de suite...

Comme il va de soi, l'invention ne se limite pas à la seule forme d'exécution de ce dispositif pour le moulage des fromages à pâtes pressées qui a été décrite ci-dessus, à titre d'exemple non limitatif ; elle en embrasse, au contraire, toutes les variantes de réalisation et d'application respectant le même principe. Ainsi, l'on ne s'éloignerait pas du cadre de l'invention en remplaçant les vérins de commande 4 et 15 par tous moyens équivalents capables de déplacer le couteau obturateur 3 et l'obturateur intérieur 9, ou en modifiant le mécanisme de commande du mouvement vertical par exemple en n'utilisant qu'un seul moto-réducteur, ou encore en adaptant le dispositif pour le moulage de fromages à forme non cylindrique ; en particulier, dans le cas de fromages à forme carrée ou rectangulaire, le conformateur 5 peut être constitué par des éléments de paroi de forme plane, séparés les uns des autres par des fentes verticales débouchantes vers le bas, l'obturateur inférieur étant toujours percé de fentes séparées les unes des autres par des parties pleines situées en correspondance avec ces fentes verticales. De plus, ce même dispositif peut comporter plusieurs colonnes tubulaires de moulage, avec un couteau obturateur unique commun à toutes les colonnes de moulage, un conformateur multiple formé par exemple par plusieurs parois cylindriques avec fentes, et un obturateur inférieur également unique et commun comportant plusieurs ensembles de fentes en correspondance avec les différentes parois cylindriques du conformateur.

## Revendications

1. Dispositif pour le moulage des fromages à pâtes pressées, avec au moins une colonne tubulaire de moulage (1) à la base de laquelle est prévu un couteau obturateur (3) à mouvement horizontal (F1), surmontant un conformateur (5), et un obturateur inférieur (9) à mouvement horizontal (F3,F4) et des moyens (14 à 21) étant prévus pour déplacer l'obturateur inférieur (9) non seulement en direction horizontale mais aussi en direction verticale (F2), caractérisé en ce que la paroi latérale (6) du conformateur (5) comporte des fentes verticales (7) débouchantes vers le bas, et en ce que l'obturateur inférieur (9) est percé de fentes discontinues (12) selon une ligne fermée correspondant à la section horizontale du conformateur (5), les fentes (12) de l'obturateur inférieur (9) étant séparées les unes des autres par des parties pleines (13) situées en correspondance avec les fentes verticales (7) du conformateur (5), de façon à ce que cet obturateur inférieur (9) puisse coulisser librement dans le conformateur (5), jusqu'à une position haute adjacente au couteau obturateur (3).

2. Dispositif pour le moulage des fromages cylindriques à pâtes pressées, selon la revendication 1, caractérisé en ce que le conformateur (5) à paroi latérale cylindrique (6) comporte des fentes verticales (7) s'étendant suivant des génératrices de cette paroi cylindrique (6), tandis que l'obturateur inférieur (9) est percé de fentes discontinues en forme d'arcs de cercle (12) réparties le long d'une ligne circulaire.

3. Dispositif pour le moulage des fromages à forme carrée ou autre forme non cylindrique à pâtes pressées, selon la revendication 1, caractérisé en ce que le conformateur (5) est constitué par des éléments de paroi, notamment de forme plane, séparés les uns des autres par des fentes verticales débouchantes vers le bas.

4. Dispositif pour le moulage des fromages à pâtes pressées, selon l'une quelconque des revendications 1 à 3, caractérisé en ce que l'obturateur inférieur (9) est réalisé en deux demi-obturateurs inférieurs (10) avec fentes (12), pourvus chacun de moyens de commande de déplacement horizontal (15) prévus pour déplacer les deux demi-obturateurs (10) simultanément et symétriquement en les écartant ou les rapprochant l'un de l'autre.

5. Dispositif pour le moulage des fromages à pâtes pressées, selon la revendication 4, caractérisé en ce que les deux demi-obturateurs inférieurs (10) sont montés mobiles et guidés en translation sur un même cadre-support horizontal (14), sur lequel sont aussi montés les moyens de commande (15) pour le déplacement horizontal de ces deux demi-obturateurs (10), tandis que d'autres moyens de commande (18 à 21) sont prévus pour déplacer verticale ment le cadre-support (14) avec les deux demi-obturateurs (10).

6. Dispositif pour le moulage des fromages à pâtes pressées, selon la revendication 5, caractérisé en ce que les moyens de commande pour déplacer verticalement le cadre-support (14) avec les deux demi-obturateurs (10) comprennent des mécanismes verticaux vis-écrou (18, 19) entraînés en synchronisme à partir d'au moins un moto-réducteur (21).

## Patentansprüche

1. Vorrichtung zum Formen von gepreßtem Käse, mit wenigstens einer rohrförmigen Formsäule (1), an deren Basis ein horizontal beweglicher (F1) Messerverschluß (3) vorgesehen ist, der oberhalb eines Formgebungselements (5) angeordnet ist, und mit einem unteren horizontal beweglichen (F3,F4) Verschluß (9), und mit Mitteln (14 bis 21) zum Verschieben des unteren Verschlusses (9) nicht nur in horizontaler, sondern auch in vertikaler Richtung (F2), dadurch gekennzeichnet, daß die laterale Seitenwand (6) des Formgebungselements (5) vertikale Schlitze (7) aufweist, die nach unten hin münden, und daß der untere Verschluß (9) durch intermittierende Schlitze (12) entlang einer geschlossenen Linie durchbrochen ist, die dem horizontalen Querschnitt des Formgebungselements (5) entspricht, wobei die Schlitze (12) des unteren Verschlusses (9) voneinander durch vollwandige Bereiche (13) getrennt sind, die korrespondierend mit den vertikalen Schlitzen (7) des Formgebungselements (5) angeordnet sind, so daß dieser untere Verschluß frei im Formgebungselement (5) bis zu einer oberen, zum Messerverschluß (3) benachbarten Position gleiten kann.

2. Vorrichtung zum Formen von zylinderförmigem gepreßtem Käse nach Anspruch 1, dadurch gekennzeichnet, daß das Formgebungselement (5) mit lateraler zylindrischer Seitenwand (6) vertikale Schlitze (7) aufweist, die sich entlang von Mantellinien dieser zylindrischen Seitenwand (6) erstrecken, während der untere Verschluß (9) durch intermittierende Schlitze in Form von Kreisbögen (12) durchbrochen ist, die entlang einer Kreislinie verteilt sind.

3. Vorrichtung zum Formen von gepreßtem Käse in Vierecksform oder in anderer nichtzylindrischer Form nach Anspruch 1, dadurch gekennzeichnet, daß das Formgebungselement (5) durch Seitenwandelemente gebildet wird, insbesondere mit ebener Gestalt, die voneinander durch nach unten hin mündende vertikale Schlitze getrennt sind.

4. Vorrichtung zum Formen von gepreßtem Käse nach einem der Ansprüche 1 bis 3, dadurch gekennzeichnet, daß der untere Verschluß (9) durch zwei mit Schlitzen (12) versehene Halbverschlüsse (10) realisiert ist, von denen jeder mit Steuermitteln (15) zur horizontalen verschiebung versehen ist, die zum simultanen und symmetrischen Verschieben der beiden Halbverschlüsse (10) vorgesehen sind, wobei diese gegenseitig auseinandergehen oder sich annähern.

5. Vorrichtung zum Formen von gepreßtem Käse nach Anspruch 4, dadurch gekennzeichnet, daß die beiden unteren Halbverschlüsse (10) beweglich montiert und translatorisch an einem gleichen horizontalen Tragrahmen (14) geführt sind, an dem auch die Steuermittel (15) zur horizontalen Verschiebung dieser beiden Halbverschlüsse (10) montiert sind, während andere Steuermittel (18 bis 21) zur vertikalen Verschiebung des Tragrahmens (14) mit den beiden Halbverschlüssen (10) vorgesehen sind.

6. Vorrichtung zum Formen von gepreßtem Käse nach Anspruch 5, dadurch gekennzeichnet, daß die Steuermittel zum vertikalen Verschieben des Tragrahmens (14) mit den beiden Halbverschlüssen (10) vertikale Schrauben-Mutter-Vorrichtungen (18,19) enthalten, die synchron mit Hilfe wenigstens eines Getriebemotors (21) angetrieben sind.

## Claims

1. Device for moulding pressed cheeses, with at least one tubular moulding column (1) at the base of which is provided a shutter blade (3) with a horizontal movement (F1), surmounting a shaper (5), and a lower shutter (9) with a horizontal movement (F3, F4), and means (14 to 21) being provided for moving the lower shutter (9) not only in a horizontal direction but also in a vertical direction (F2), characterised in that the side wall (6) of the shaper (5) has vertical slots (7) opening out at the bottom, and in that the lower shutter (9) has in it discontinuous slots (12) in a closed line corresponding to the horizontal cross section of the shaper (5), the slots (12) in the lower shutter (9) being separated from each other by solid parts (13) situated so as to correspond with the vertical slots (7) in the shaper (5), so that this lower shutter (9) is able to slide freely in the shaper (5) as far as an upper position adjacent to the shutter blade (3).

2. Device for moulding cylindrical pressed cheeses, according to Claim 1, characterised in that the shaper (5) with a cylindrical side wall (6) has vertical slots (7) lying along generatrices of this cylindrical wall (6), whilst the lower shutter (9) has in it discontinuous slots in the form of arcs of a circle (12) distributed along a circular line.

3. Device for moulding pressed cheeses with a square or other non-cylindrical shape, according to Claim 1, characterised in that the shaper (5) is formed by wall members, notably flat in shape, separated from each other by vertical slots opening out at the bottom.

4. Device for moulding pressed cheeses, according to any one of Claims 1 to 3, characterised in that the lower shutter (9) is produced as two lower half shutters (10) with slots (12), each with means for controlling the horizontal movement (15) designed to move the two half shutters (10) simultaneously and symmetrically by separating them or bringing them together.

5. Device for moulding pressed cheeses, according to Claim 4, characterised in that the two lower half shutters (10) are mounted so as to be movable and guided in translational motion on one and the same horizontal support frame (14), on which the control means (15) for the horizontal movement of these two half shutters (10) are also mounted, whilst other control means (18 to 21) are provided so as to move the support frame (14) vertically with the two half shutters (10).

6. Device for moulding pressed cheeses, according to Claim 5, characterised in that the control means for moving the support frame (14) vertically with the two half shutters (10) comprise vertical nut and screw thread mechanisms (18, 19) driven in synchrony from at least one geared motor (21).
